# EUROPEAN PATENT APPLICATION

(11) **EP 3 937 521 A1**
(43) Date of publication of application: **12.01.2022**
(21) Application number: 20185040.1
(22) Date of filing: 09.07.2020
(51) Int. Cl.: H04W 8/12, H04L 29/06, H04W 12/08, H04W 88/14, H04W 88/16

(54) **METHOD FOR AN IMPROVED EXCHANGE AND/OR INTERWORKING FUNCTIONALITY BETWEEN A FIRST MOBILE COMMUNICATION NETWORK AND A SECOND MOBILE COMMUNICATION NETWORK, SYSTEM, NETWORK EXCHANGE FUNCTION, PROGRAM AND COMPUTER PROGRAM PRODUCT**

(71) Applicant: Deutsche Telekom AG, 53113 Bonn (DE)
(72) Inventor: COLOM IKUNO, Josep, 2100 Korneuburg (AT)
(74) Representative: Schwöbel, Thilo K.

(57) **Abstract**

The invention relates to a method for an improved exchange and/or interworking functionality between a first mobile communication network and a second mobile communication network, wherein the first mobile communication network comprise a first network repository function and a plurality of first network functions or services, and wherein the second mobile communication network comprise a second network repository function and a plurality of second network functions or services, wherein a network exchange function provides an exchange and/or interworking functionality between the first and second mobile communication network, wherein the network exchange function comprises an exchange network repository function and a plurality of exchange network functions or services, wherein control plane messages or messages regarding procedures are exchanged, via the network exchange function, between the first and second mobile communication network, such messages involving pieces of endpoint information referring to target interconnection endpoints within the first or second mobile communication network, wherein the method comprises the following step:
the control plane messages or messages regarding procedures are modified with respect to their pieces of endpoint information such that instead of the pieces of endpoint information referring to target interconnection endpoints within the first or second mobile communication network, the pieces of endpoint information refer to the network exchange function or its exchange network functions or services.

## Description

### BACKGROUND

The present invention relates a method for an improved exchange and/or interworking functionality between a first mobile communication network and a second mobile communication network, wherein the first mobile communication network comprises a first network repository function and a plurality of first network functions or services, and wherein the second mobile communication network comprises a second network repository function and a plurality of second network functions or services, wherein a network exchange function provides an exchange and/or interworking functionality between the first and second mobile communication network.

Furthermore, the present invention relates to a system for an improved exchange and/or interworking functionality between a first mobile communication network and a second mobile communication network, wherein the first mobile communication network comprises a first network repository function and a plurality of first network functions or services, and wherein the second mobile communication network comprises a second network repository function and a plurality of second network functions or services, wherein a network exchange function provides an exchange and/or interworking functionality between the first and second mobile communication network.

Additionally, the present invention relates to a network exchange function for an improved exchange and/or interworking functionality between a first mobile communication network and a second mobile communication network, wherein the first mobile communication network comprises a first network repository function and a plurality of first network functions or services, and wherein the second mobile communication network comprises a second network repository function and a plurality of second network functions or services, wherein a network exchange function provides an exchange and/or interworking functionality between the first and second mobile communication network.

Furthermore, the present invention relates to a program, and a computer program product for an improved exchange and/or interworking functionality between a first mobile communication network and a second mobile communication network.

Conventionally, mobile communication networks can be operated for providing a roaming functionality to user equipments having a home network or home public land mobile network that are used or located or connected to another mobile communication network. Enabling such a roaming functionality between different mobile communication networks according to the 5G standard (fifth generation mobile communication network) typically requires configuration steps so that requests are routed from a visited public land mobile network (V-PLMN) to the network repository function, NRF, of another network or operator and, based on the information returned, connect with the correct network network elements or network functions or services within the home public land mobile network (H-PLMN).

However, the conventional manner of providing such a roaming functionality, typically making use of so-called SEPP configuration (Security Edge Protection Proxy) is technically complex, as all connections between SEPP pairs need to be configured.

### SUMMARY

An object of the present invention is to provide a technically simple, effective and cost effective solution for an improved exchange and/or interworking functionality between a first mobile communication network and a second mobile communication network, wherein the first mobile communication network comprises a first network repository function and a plurality of first network functions or services, and wherein the second mobile communication network comprises a second network repository function and a plurality of second network functions or services, wherein a network exchange function provides an exchange and/or interworking functionality between the first and second mobile communication network. A further object of the present invention is to provide a corresponding system and a corresponding network exchange function, and a corresponding program and computer program product.

The object of the present invention is achieved by a method for an improved exchange and/or interworking functionality between a first mobile communication network and a second mobile communication network, wherein the first mobile communication network comprises a first network repository function and a plurality of first network functions or services, and wherein the second mobile communication network comprises a second network repository function and a plurality of second network functions or services, wherein a network exchange function provides an exchange and/or interworking functionality between the first and second mobile communication network, wherein the network exchange function comprises an exchange network repository function and a plurality of exchange network functions or services, wherein by means of the first and second network repository function both the first and second plurality of network functions or services are able to discover interconnection endpoints by means of which communication with other network functions or services in this network or another network is able to be realized, wherein control plane messages or messages regarding procedures are exchanged, via the network exchange function, between the first and second mobile communication network, such messages involving pieces of endpoint information referring to target interconnection endpoints within the first or second mobile communication network, wherein the method comprises the following step: the control plane messages or messages regarding procedures are modified with respect to their pieces of endpoint information such that instead of the pieces of endpoint information referring to target interconnection endpoints within the first or second mobile communication network, the pieces of endpoint information refer to the network exchange function or its exchange network functions or services.

It is thereby advantageously possible according to the present invention to provide a solution, especially based on and using the service based interface (SBI) concept, such that a third party exchange (such as, e.g., provided by an IPX provider) could be able to manage SBI communications between different mobile communication networks and/or their operators without the V-PLMN (i.e. the visited public land mobile network) being aware of the specific configuration of the respective H-PLMN-(i.e. the home public land mobile network).

As already mentioned, conventionally, interworking between different mobile communication networks is typically realized by means of using SEPP configuration (Security Edge Protection Proxy) for the roaming combinations, i.e. for the different possible combinations of mobile communication networks (i.e. for the different possible pairs of H-PLMN and V-PLMN), this is likely to prove a rather complex task.

According to the present invention, it is advantageously possible to provide a solution to accomplish inter-network communication (i.e. communication between different mobile communication networks) without - regarding a considered pair of networks, one being, regarding a considered user equipment, the visited public land mobile network and the other being the home public land mobile network of that considered user equipment - the visited network (and vice versa) necessarily being required to be aware or to know the specific configuration of the home network, e.g. with regard to network repository function addresses and/or with regard to network function addresses per home network. Hence, as this is possible, according to the present invention, for the two mobile communication networks of a pair of interconnected networks, this is also true for a multitude of mobile communication networks coupled together by means of an interconnection mechanism.

It is furthermore advantageously possible according to the present invention to provide a solution such that communication with network functions or services in other mobile communication networks is able to be achieved without any direct connectivity between both mobile communication networks being required. According to the present invention, this is especially possible to be realized based on a network exchange (such as, e.g., an IP exchange service, IPX) with (or requiring only) reduced state information and minimum processing requirements. Thereby, it is advantageously possible according to the present invention that the network exchange (1) emulates all third-party mobile communication networks (from the perspective of a visited mobile communication network), and (2) is seen as the visited mobile communication network (from the perspective of the home mobile communication network).

According to the present invention, it is advantageously possible and preferred that the control plane messages or messages regarding procedures exchanged relate to the mapping or the transmission of network function or service profile information, wherein - during a network function or service profile information discovery phase initiated by one of the plurality of first network functions or services where the initiating network function or service queries a network repository function about network functions or services to communicate with - one or more pieces of discovery request endpoint information, referring to a target interconnection endpoint or endpoints within the second mobile communication network and returned by the network repository function are modified such that the discovery request endpoint information refers to a corresponding one of the plurality of exchange network functions or services, wherein especially the one or more pieces of network function or services profile information each comprise one or more pieces of discovery request endpoint information.

It is thereby advantageously possible according to the present invention to apply the inventive method to the handling of discover requests.

According to the present invention, it is advantageously furthermore possible and preferred that the control plane messages or messages regarding procedures exchanged realize a subscribe-notify communication pattern, wherein, during a subscription request phase initiated by one of the plurality of first network functions or services, a subscription request endpoint information, referring to a target interconnection endpoint within the first mobile communication network, is modified such that the subscription request endpoint information refers to a corresponding one of the plurality of exchange network functions or services.

It is thereby advantageously possible according to the present invention to apply the inventive method to the handling of subscription requests.

According to the present invention, it is advantageously possible and preferred that the control plane messages or messages regarding procedures exchanged relate to a resource creation between network functions or services, wherein, during a resource creation request phase initiated by one of the plurality of first network functions or services, a resource creation request endpoint information, referring to a target interconnection endpoint within the second mobile communication network referring to the created resource, is modified such that the resource creation request endpoint information refers to a corresponding one of the plurality of exchange network functions or services.

It is thereby advantageously possible according to the present invention to apply the inventive method to the handling of resource creation requests.

According to the present invention, it is advantageously possible and preferred that the modification of the endpoint information within the control plane messages or messages regarding procedures corresponds to modifying and/or replacing any required header such that the resulting modified control plane messages or messages regarding procedures are correctly seen by the receiving first or second or exchange network functions or services as addressed to itself.

Thereby, it is advantageously possible to implement the inventive method comparatively easily and efficiently.

Furthermore, it is advantageously possible and preferred according to the present invention that the network exchange function comprises an endpoint management function, wherein the endpoint management function generates URI information in the network exchange function
-- in order to modify the control plane messages or messages regarding procedures and/or
-- in order to modify and/or replace any required header
based on one or a plurality of the following:
-- one or a plurality of fully qualified domain names controlled by the network exchange function,
-- the mobile communication network being accessed,
-- the type of the network function or service concerned,
-- the service name of the network function or service concerned,
-- the instance identifier or the service instance identifier of the network function or service concerned,
-- the resource identifier information of the network function or service concerned,
-- the subscription identifier information of the network function or service concerned.

Furthermore, it is advantageously possible and preferred according to the present invention that, in addition to the first and second mobile communication network at least one further mobile communication network is connected to or served by the network exchange function such that control plane messages or messages regarding procedures are also exchanged via the network exchange function, and modified analogously, with respect an exchange between the first and the at least one further mobile communication network and/or between the second and the at least one further mobile communication network.

Thereby, it is advantageously possible according to the present invention to implement an IPX service between a plurality of network by means of the inventive network exchange function.

Furthermore, the present invention relates to a system for an improved exchange and/or interworking functionality between a first mobile communication network and a second mobile communication network, wherein the first mobile communication network comprise a first network repository function and a plurality of first network functions or services, and wherein the second mobile communication network comprise a second network repository function and a plurality of second network functions or services, wherein a network exchange function provides an exchange and/or interworking functionality between the first and second mobile communication network, wherein the network exchange function comprises an exchange network repository function and a plurality of exchange network functions or services, wherein control plane messages or messages regarding procedures are exchanged, via the network exchange function, between the first and second mobile communication network, such messages involving pieces of endpoint information referring to target interconnection endpoints within the first or second mobile communication network, wherein the system is configured such that: the control plane messages or messages regarding procedures are modified with respect to their pieces of endpoint information such that instead of the pieces of endpoint information referring to target interconnection endpoints within the first or second mobile communication network, the pieces of endpoint information refer to the network exchange function or its exchange network functions or services.

Furthermore, the present invention relates to a network exchange function for an improved exchange and/or interworking functionality between a first mobile communication network and a second mobile communication network, wherein the first mobile communication network comprise a first network repository function and a plurality of first network functions or services, and wherein the second mobile communication network comprise a second network repository function and a plurality of second network functions or services, wherein a network exchange function provides an exchange and/or interworking functionality between the first and second mobile communication network, wherein the network exchange function comprises an exchange network repository function and a plurality of exchange network functions or services, wherein control plane messages or messages regarding procedures are exchanged, via the network exchange function, between the first and second mobile communication network, such messages involving pieces of endpoint information referring to target interconnection endpoints within the first or second mobile communication network, wherein the network exchange function is configured such that:
the control plane messages or messages regarding procedures are modified with respect to their pieces of endpoint information such that instead of the pieces of endpoint information referring to target interconnection endpoints within the first or second mobile communication network, the pieces of endpoint information refer to the network exchange function or its exchange network functions or services.

Still additionally, the present invention relates to a program comprising a computer readable program code which, when executed on a computer and/or on a network node of a mobile communication network and/or on a network exchange function, or in part on a network node of a mobile communication network and in part on a network exchange function, causes the computer and/or the network node of the mobile communication network and/or the network exchange function to perform the inventive method.

Furthermore, the present invention relates to a computer program product for an improved emulation and/or interworking functionality between a first mobile communication network and a second mobile communication network, the computer program product comprising a computer program stored on a storage medium, the computer program comprising program code which, when executed on a computer and/or on a network node of a mobile communication network and/or on a network exchange function, or in part on a network node of a mobile communication network and in part on a network exchange function, causes the computer and/or the network node of the mobile communication network and/or the network exchange function to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figures 1 and 2 schematically illustrate a first and second mobile communication network, and a network exchange function according to the present invention.
Figure 3 schematically shows an example of several mobile communication networks being connected by means of a network exchange function or an IP exchange service.
Figure 4 schematically shows a communication diagram with control plane messages or messages regarding procedures exchanged relating to the mapping or the transmission of network function or service profile information in a discovery procedure according to the present invention.
Figures 5 and 6 schematically show a communication diagram with control plane messages or messages regarding procedures exchanged realizing a subscribe-notify communication pattern.
Figures 7 and 8 schematically show a communication diagram with control plane messages or messages regarding procedures exchanged relating to a resource creation between network functions or services.
Figure 9 schematically shows a communication diagram representing dynamic generation of endpoint mappings.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

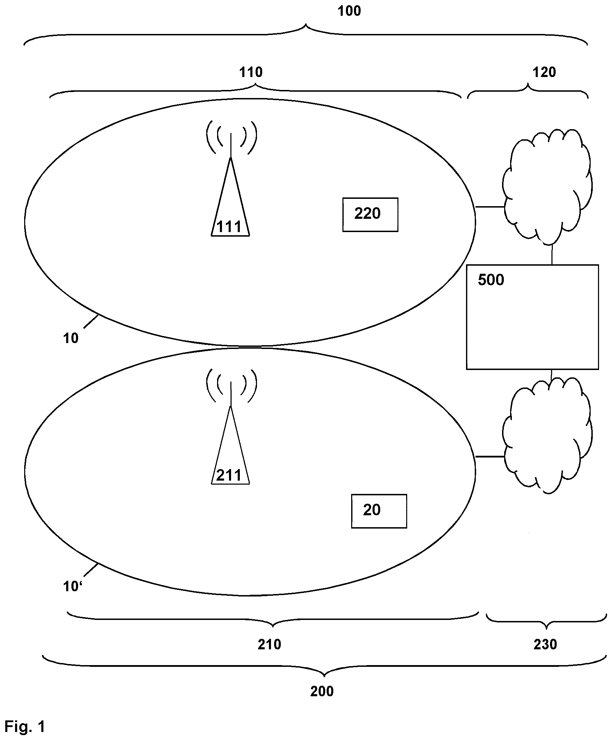

In Figure 1, a first mobile communication network 100 and a second mobile communication network 200 with a network exchange function 500 are schematically shown. The first mobile communication network 100 is implemented comprising a first radio access network 110 and a first core network 120, the first radio access network 110 exemplarily comprising a first base station entity 111 serving a first radio cell 10 or a corresponding radio coverage area. Likewise, the second mobile communication network 200 is implemented comprising a second radio access network 210 and a second core network 230, the second radio access network 210 exemplarily comprising a second base station entity 211 serving a second radio cell 10' or a corresponding radio coverage area. Typically such cellular mobile communication networks 100, 200 comprise a multitude of different base station entities and a corresponding plurality of radio cells. The first and second mobile communication networks 100, 200 are typically used to provide communication services to a number of user equipments connected or attached or registered to these mobile communication networks. In Figure 1, only a first user equipment 20 and a second user equipment 220 is schematically shown, the first user equipment 20 having the first mobile communication network 100 as its home network (or home public land mobile network), and the second user equipment 220 having the second mobile communication network 200 as its home network (or home public land mobile network). The situation shown in Figure 1 corresponds to a roaming situation for both the first and the second user equipments 20, 220: The first user equipment 20 is roaming to (or in) the second mobile communication network 200, and the second user equipment 220 is roaming to (or in) the first mobile communication network 100.

Both the first and the second mobile communication network 100, 200 are typically 5G-networks (or a higher generation (than 5G) mobile communication networks). This means that both the first and second mobile communication network 100, 200 are mobile communication networks realizing dynamic deployment or configuration of its plurality of network functions or services such that the plurality of network functions or services composing these networks are able to discover interconnection endpoints by means of which communication with other network functions or services especially in other networks is able to be realized. One possibility thereof is the querying of a network function registry or network repository function.

It is conventionally known, how to provide or enable roaming between a 5G and a 4G mobile communication network, such as the first and second mobile communication network 100, 200. In order to provide a user equipment in a 5G System connectivity to a Data Network (e.g. the Internet), the user equipment is connected to an access network (e.g. gNBs, WiFi access) and a core network provides connectivity towards the data network. The user equipment possesses a subscription to the network it is attached which the core network evaluates so as to among other things confirm that the user equipment has indeed the right to access the requested resources. In a roaming case, a user equipment with a subscription to, e.g., a first network is attached to a second network as a visited network, which has a roaming agreement with the first network to either forward Control Plane (CP) and User Plane (UP) traffic towards the first network (home routed case) or to locally route the user plane traffic (local breakout case). In the context of 5G, the local breakout and home-routed cases differ in the amount of inter-network interface required for performing CP/UP communication between the home and visited networks; 3GPP document TS 23.501 defines the interfaces between the visited and home 5G network cores in the roaming case. It is known to the visited network that a given user equipment is a subscriber of another network. In order for a 5G core network function to be able to communicate with network functions of another network (e.g. of another PLMN, identified by a PLMN ID different than that of the own network), the network function(s) in the visited network either have local configuration pointing to network functions in each specific home network with which a roaming agreement exists or the Network Repository Function (NRF) is used to discover such network functions of the home network. Among 5G network, it is possible to identify the next hop network repository function based on local configuration or stored network function profiles of network repository functions from other networks. After the discovery requestor has received the network function profile search result, a request can then be sent directly or indirectly via a SEPP proxy (security edge protection proxy) towards the target network function. For each roaming partner, additional configuration and connectivity configurations need be setup. SEPP proxies are used to secure communications between the roaming partners, requiring additional configuration between each network pair. One or more IP exchange services (IPX) can be placed in the path. The IPX service provides connectivity services between the several roaming partners but is not a functional entity in the sense that network functions are not aware of its presence. As such, each 5G core network need to contain network-specific configuration to a) be able to properly setup SEPP connectivity towards other networks, and b) contain local configuration of network functions in other networks (NRF/NSSF or directly relevant NFs). In the context of pre-5G roaming, IPX services route messages (e.g. Diameter, SCTP protocols) based on static routing tables.

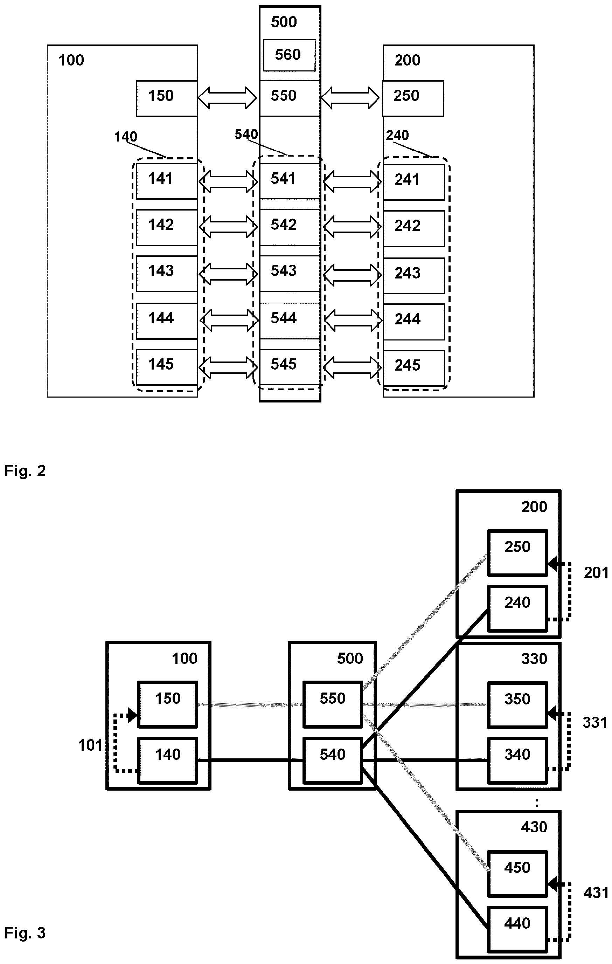

In Figure 2, the first and second mobile communication networks 100, 200, and the network exchange function 500 are again schematically shown but in greater detail regarding the network functions or services. As is typical for 5G-mobile communication networks, the first mobile communication network 100 comprises a first network repository function 150 as well as a plurality of first network functions or services 140. Likewise the second mobile communication network 200 also comprises a second network repository function 250 and a plurality of second network functions or services 240. The network exchange function 500 provides an exchange and/or interworking functionality between the first and second mobile communication networks 100, 200, and the network exchange function 500 also comprises an exchange network repository function 550 and a plurality of exchange network functions or services 540.

By means of the first and second network repository functions 150, 250 both the first and second plurality of network functions or services 140, 240 (of the first and second mobile communication networks 100, 200, respectively) are able to discover interconnection endpoints by means of which communication with other network functions or services in this network (i.e. in the first mobile communication network 100 in case one of the first network functions or services initiates the discovery procedure or in the second mobile communication network 200 in case that one of the second network functions or services initiates the discovery procedure) or in another network is able to be realized. In order to realize this a certain number of control plane messages or messages regarding procedures are exchanged, via the network exchange function 500, between the involved first network functions or services and/or second network functions or services and/or exchange network functions or services. Such messages involve pieces of endpoint information referring to target interconnection endpoints within the first or second mobile communication network 100, 200.

According to the inventive method, the control plane messages or messages regarding procedures are modified with respect to their pieces of endpoint information such that instead of the pieces of endpoint information referring to target interconnection endpoints within the first or second mobile communication network 100, 200, the pieces of endpoint information refer to the network exchange function 500 or its exchange network functions or services 540. This basic mechanism is applicable in or for all embodiments according to the present invention.

The inventive method is based on the premise of making the network exchange function 500 (or, alternatively, an IPX service) operating as an application-level relay for SBI messages. The network exchange function 500 (or IPX service) is visible from the perspective of the respective mobile communication networks as the actual counterpart network's endpoints. As opposed to conventionally known methods, this method relies on dynamic system information (network function or service profile data) to route messages between different mobile communication networks, as well as to modify messages being routed via the network exchange function 500 (or via the IPX service).

The plurality of first network functions or services 140 especially comprises specific network functions or services, indicated by means of reference signs 141, 142, 143, 144, 145, 146; likewise the plurality of second network functions or services 240 especially comprises further specific network functions or services, indicated by means of reference signs 241, 242, 243, 244, 245, 246; and the plurality of exchange network functions or services 540 especially comprise specific exchange network functions or services, indicated by means of reference signs 541, 542, 543, 544, 545, 546. For example, the first specific network function or service 141 realizes or corresponds to a network slice selection function (of or within the first mobile communication network 100); the second specific network function or service 142 realizes or corresponds to an authentication server function (of or within the first mobile communication network 100); the third specific network function or service 143 realizes or corresponds to a policy and charging function; the fourth specific network function or service 144 realizes or corresponds to a session management function; the fifth specific network function or service 145 realizes or corresponds to a user plane function. For example, the first further specific network function or service 241 realizes or corresponds to a network slice selection function (of or within the second mobile communication network 200); the second further specific network function or service 242 realizes or corresponds to an authentication server function (of or within the second mobile communication network 200); the third further specific network function or service 143 realizes or corresponds to a policy and charging function; the fourth further specific network function or service 144 realizes or corresponds to a session management function; the fifth further specific network function or service 145 realizes or corresponds to a user plane function. Likewise, the first exchange network function or service 541 realizes or corresponds to a network slice selection function (of or within the network exchange function 500); the second exchange network function or service 542 realizes or corresponds to an authentication server function (of or within the network exchange function 500); the third exchange network function or service 543 realizes or corresponds to a policy and charging function; the fourth exchange network function or service 544 realizes or corresponds to a session management function; the fifth exchange network function or service 545 realizes or corresponds to a user plane function.

As a consequence, the network exchange function 500 (or the IPX service) expose - by means of the exchange network functions or services 540 application-level SBI relays.

In Figure 3, an example of several mobile communication networks being connected by means of a network exchange function or an IP exchange service is schematically shown. Besides the first and second mobile communication network 100, 200, a third mobile communication network 330, and a fourth mobile communication network 430 is represented. As for the first and second mobile communication network 100, 200, also the third mobile communication network 330 comprises a network repository function 350 (or third network repository function), as well as a plurality of network functions or services 340 (or third network functions or services), and the fourth mobile communication network 430 comprises a network repository function 450 (or fourth network repository function), as well as a plurality of network functions or services 440 (or fourth network functions or services). Reference signs 101, 201, 331, and 431 represent the basic functionality according to which a registration occurs, by the respective network function or service (of the same network), to the network repository function of the same network, i.e. one of the first network functions or services 140 registrates with or to the first network repository function 150 (cf. reference sign 101, i.e. within the own network, searching network functions or services in external networks 200, 330, 430), one of the second network functions or services 240 registrates with or to the second network repository function 250 (cf. reference sign 201), etc. - i.e. it is differentiated between the network repository function and other network functions or services: a network function or service requiring a network function or service in another network (e.g. in another public land mobile network) is able to query the network repository function in its (own) network and network functions or services register on the own network's NRF. Assuming the first mobile communication network 100 acting a visited mobile communication network or visited public land mobile network for a considered user equipment (e.g. user equipment 220), the other mobile communication networks 200, 330, 430 could potentially correspond to home mobile communication networks or home public land mobile networks for the considered user equipment 220. The exchange network repository function 550 receives network repository function discovery requests from the first network repository function (in the first mobile communication network 100), acting according to the assumption and queries the corresponding, e.g. second network repository function 250 (as the home public land mobile network), retrieving network function or service profile results. The received network function or service profile comprises endpoint information (e.g. FQDN, IP address(es)) where the service from one network function or service to another network function or service can be reached. The network function or service profile results sent towards the first network repository function 150 (acting as visited network repository function) contain endpoints of exchange network function or service 540 instead of endpoints within the home networks (such as 240, 340, etc.). When one of the first network functions or services 140 sends an operative request based on the received network function or service profile(s), it will send such a request to the corresponding exchange network function or service (which acts - from the point of view of the first network function or service 140 - as the corresponding network function or service in the home mobile communication network); only in a second step, the exchange network function or service 540 then forwards such a request towards the actual home mobile communication network, e.g. the second mobile communication network 200, or the third or fourth mobile communication network 330, 430. The authorization data including certificates are also to be replaced by the corresponding exchange network function or service of the plurality of exchange network functions or services 540 (or, else, authorization may fail). Since the echange network function or service 540 is effectively terminating the connection at application layer, this is possible. Whether a network exchange function-SEPP instance (or an IPX-SEPP) instance (i.e. terminating connections between a network and the network exchange function (or IPX functionality) is present is not incompatible with the inventive method.

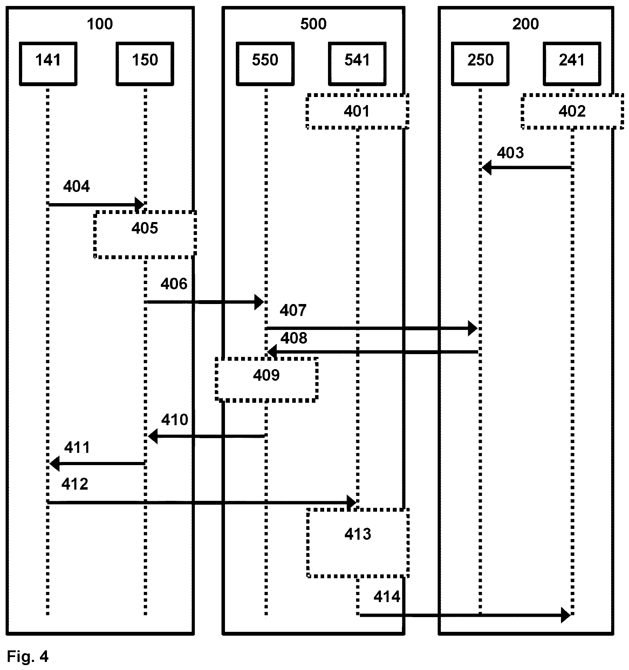

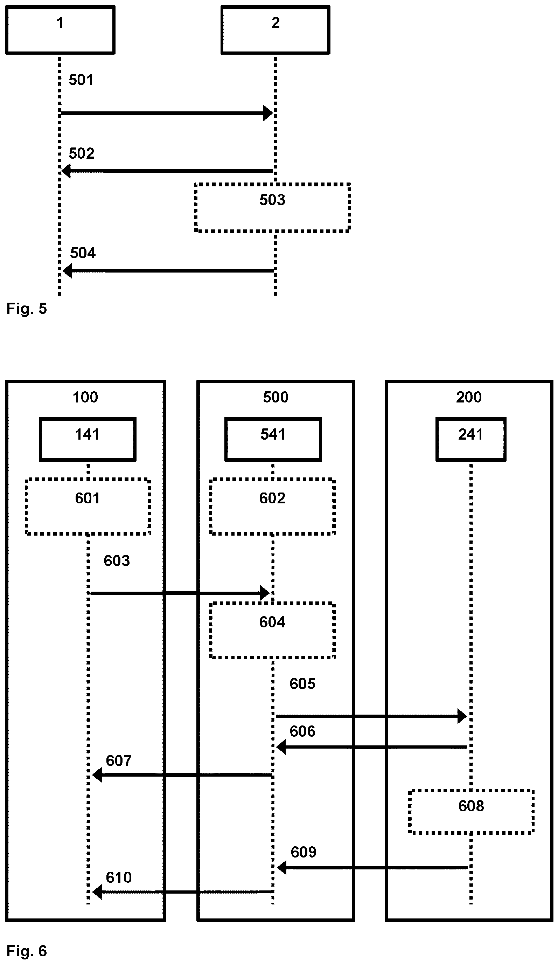

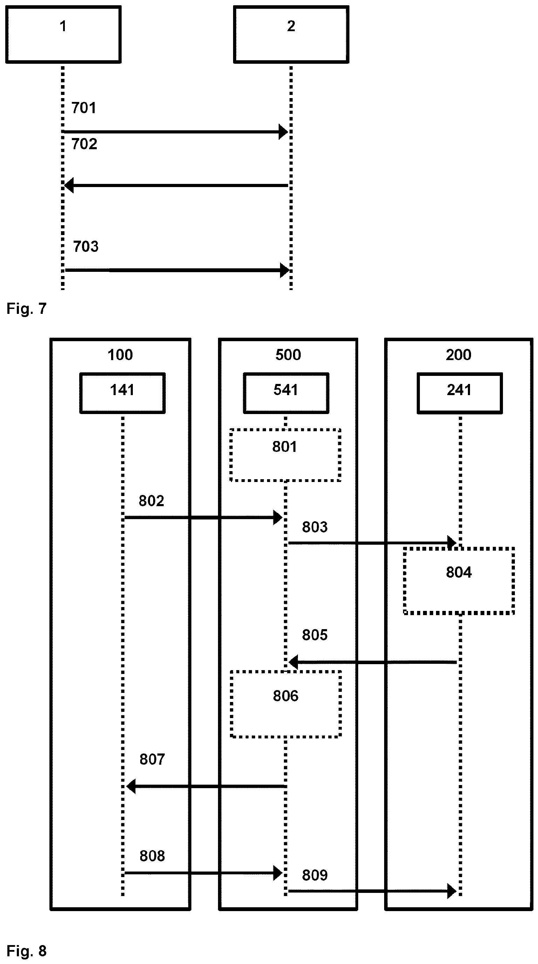

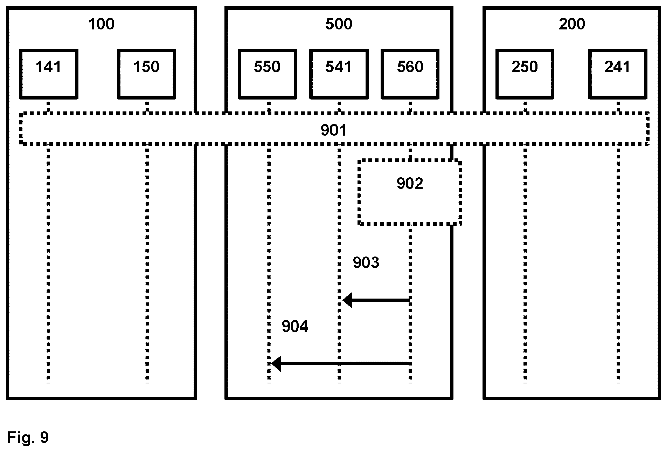

In the following three different specific embodiments are exemplarily shown and described implementing the basic mechanism: In Figure 4 a communication diagram with control plane messages or messages regarding procedures exchanged relating to the mapping or the transmission of network function or service profile information in a discovery procedure is shown according to the present invention. In Figures 5 and 6, likewise a communication diagram with control plane messages or messages regarding procedures exchanged realizing a subscribe-notify communication pattern is shown according to the present invention. In Figures 7 and 8, likewise a communication diagram with control plane messages or messages regarding procedures exchanged relating to a resource creation between network functions or services is shown according to the present invention. Figure 9 schematically shows a communication diagram representing dynamic generation of endpoint mappings.

In Figure 4, the communication between the first mobile communication network 100 and the second mobile communication network 200 via the network exchange function 500 in order to conduct a discovery procedure is shown according to the present invention. It is assumed that a first specific network function or service 141 of the first mobile communication network 100 requests the discovery of a corresponding network function or service (first further specific network function or service 241) in the second mobile communication network 200, involving the first exchange network function or service 541 of the network exchange function 500.

In a first processing step 401 according to Figure 4, the first exchange network function or service 541 is accessible via an endpoint Y. In a second processing step 402 according to Figure 4, the first further specific network function or service 241 is accessible via an endpoint Z. In a third processing step 403 according to Figure 4, the first further specific network function or service 241 registers its network function or service profile in the second network repository function 250. In a fourth processing step 404 according to Figure 4, the first specific network function or service 141 sends a discovery request (message) to the first network repository function 150 in the first mobile communication network 100. In a fifth processing step 405 according to Figure 4, the first network repository function 150 is configured to route roaming requests to the network exchange function 500. In a sixth processing step 406 according to Figure 4, the discovery request for the first specific network function or service 141 is sent by the first network repository function 150 to the exchange network repository function 550 of the network exchange function 500. In a seventh processing step 407 according to Figure 4, the discovery request for the first specific network function or service 141 is further sent by the exchange network repository function 550 to the second network repository function 250. In an eighth processing step 404 according to Figure 4, the second network repository function 250 returns the network function or service profile of the first further specific network function or service 241 (which is accessible via endpoint Z). In a ninth processing step 409 according to Figure 4, the endpoint(s) in the network function or service profile of the first further specific network function or service 241 are mapped to the endpoint(s) in the first exchange network function or service 541, i.e. endpoint Y. In a tenth processing step 410 according to Figure 4, the network function or service profile of the first further specific network function or service 241 (which is now, after the mapping the ninth processing step 409, accessible via Endpoint Y) is returned to the first network repository function 150. In an eleventh processing step 411 according to Figure 4, the network function or service profile of the first further specific network function or service 241 (but with mapped endpoint Y, and, hence, accessibility via Endpoint Y) is returned, by the first network repository function 150, to the first specific network function or service first specific network function or service 141. In a twelfth processing step 412 according to Figure 4, the preparation (initiated by the discovery request of the third processing step and performed by means of the first to eleventh processing steps) is operatively used by means of a request of the first specific network function or service 141 to the first further specific network function or service 241 which is, however (now) directed to endpoint Y, i.e. this request is received by the first exchange network function or service 541. In a thirteenth processing step 413 according to Figure 4, forwarding by the first exchange network function or service 541 of the received (request) message to the first further specific network function or service 241 is prepared; there may be a replacement of message content. In a fourteenth processing step 414 according to Figure 4, the request (initially intended for the first further specific network function or service 241) is eventually receveived by the first further specific network function or service 241 as it is directed to endpoint Z. In the context of the present invention and regarding all embodiments thereof, it is to be understood that if a "request is directed to" (some entity), this also implies that any required headers (e.g. URI header in the HTTP request) are replaced so that the request is correctly seen by the receiving side as addressed to itself.

The procedure according to Figure 4 is applicable for request/response communication pattern. However, SBI also supports a subscribe/notify communication patter. This is shown in Figures 5 and 6. In Figure 5, only the general principle of a subscribe/notify communication is schematically shown between a network function or service consumer 1 and a network function or service producer 2. In a first processing step 501 according to figure 5, the network function or service consumer 1 subscribes to event(s) of a certain type at the network function or service producer; this includes to send or to indicate, in a message or in a notification, an endpoint X , a subscription request endpoint information, where such events should be sent to. In a second processing step 502 according to figure 5, the subscription confirmed by means of a message, including a subscription identifier, sent by the network function or service producer 2 to the network function or service consumer 1. In a third processing step 503 according to figure 5, an event matching the subscription is generated and/or received by the network function or service producer 2, and in a fourth processing step 504 according to Figure 5, the event, or a notification thereof, is sent, by the network function or service producer 2 towards the indicated notification endpoint X, i.e. to the network function or service consumer 2. This general principle, applied to a subscription initiated, exemplarily, by the first specific network function or service 141 as a service consumer is modified according to the present invention and shown in Figure 6.

In a first processing step 601 according to Figure 6, the first specific network function or service 141 (i.e. service consumer) is reachable for notifications via endpoint X. In a second processing step 602 according to Figure 6, the first exchange network function or service 541 (corresponding to the network exchange function 500 service consumer) is reachable for notifications via endpoint Y. In a third processing step 603 according to Figure 6, the first specific network function or service 141 subscribes to an event or to events of a certain type by means of a message to the first exchange network function or service 541, this message including the endpoint X where events should be sent. In a fourth processing step 604 according to Figure 6, the endpoint address in the request is modified by the first exchange network function or service 541 so that it points to endpoint Y. In a fifth processing step 605 according to Figure 6, the first exchange network function or service 541 subscribes to the event or events as in the message of the first specific network function or service 141, i.e. event(s) of a certain type; this subscription message Includes the notification of endpoint Y where events should be sent, i.e. to the first exchange network function or service 541. In a sixth processing step 606 according to Figure 6, the first further specific network function or service 241 confirms the subscription including a subscription identifier to the first exchange network function or service 541 (as endpoint Y was indicated in the requesting message). In a seventh processing step 607 according to Figure 6, the subscription is confirmed, including the subscription identifier, by means of a message sent by the first exchange network function or service 541 to the first specific network function or service 141. In an eighth processing step 608 according to Figure 6, an event matching the subscription is generated or received by the first further specific network function or service 241. In a ninth processing step 609 according to Figure 6, the notification about the event is sent towards notification endpoint Y at the first exchange network function or service 541. In a tenth processing step 610 according to Figure 6, a message comprising the event notification is sent towards the notification endpoint X, i.e. the first specific network function or service 141. Hence, a subscription, initiated by the first specific network function or service 141, is indeed performed including a notification endpoint; however, due to the modification of messages and notifications in the network exchange function 500, especially regarding endpoints, the first further specific network function or service 241, generating the event notification, does not need to know the endpoint of first specific network function or service 141, as the network exchange function 500 replaces the returned resource address(es) so that they map to endpoints in the network exchange function 500 instead of to endpoints within the first mobile communication network 100.

The procedure according to Figure 4 is applicable for request/response communication pattern. However, SBI also supports resources being created by a request, on which a resource address is returned to which subsequent resource operations are addressed. This is shown in Figures 7 and 8. In Figure 7, only the general principle of a resource creation operation is schematically shown between a network function or service consumer 1 and a network function or service producer 2. In a first processing step 701 according to figure 7, the network function or service consumer 1 requests the creation of the resource at the network function or service producer 2; this includes to send or to indicate, in a message or in a notification, an endpoint X of the network function or service consumer 1. In a second processing step 702 according to figure 7, the resource created including a resource address where the resource can be reached (e.g. endpoint X) is sent by the network function or service producer 2 to the network function or service consumer 1. In a third processing step 703 according to figure 7, a resource modification request or operation is sent to endpoint X, i.e. to the network function or service producer 2. This general principle, applied to a resource creation initiated, exemplarily, by the first specific network function or service 141 as a service consumer is modified according to the present invention and shown in Figure 8. In addition to the first specific network function or service 141 as service consumer, the first further specific network function or service 241 as service producer and the first exchange network function or service 541 as part of the network exchange function 500 is involved in the communication flow.

In a first processing step 801 according to Figure 8, the first exchange network function or service 541 Service Consumer is reachable for existing resources via endpoint Y. In a second processing step 802 according to Figure 8, the first specific network function or service 141 sends a message to the first exchange network function or service 541 indicating to create a resource. In a third processing step 803 according to Figure 8, the first exchange network function or service 541 sends a message to the first further specific network function or service 241 indicating to create the resource. The sent message is based on the received message in step 802 and if needed modified as per the inventive method so that the network exchange function 500 (or IPX service) is visible from the perspective of the respective mobile communication networks as the actual counterpart network's endpoints. In a fourth processing step 804 according to Figure 8, the first further specific network function or service 241 generates the requested resource; the corresponding endpoint address to be used for subsequent communication, i.e. the resource address, is defined (i.e. corresponding to endpoint X). In a fifth processing step 805 according to Figure 8, the creation of the resource (requested to be created in the second processing step 802) is confirmed by the first further specific network function or service 241 towards the first exchange network function or service 541; this also includes the indication of the resource address where the resource can be reached, i.e. endpoint X. In a sixth processing step 806 according to Figure 8, the first exchange network function or service 541 modifies the created resource endpoint address in response so that it points to endpoint Y (of the first exchange network function or service 541). In a seventh processing step 807 according to Figure 8, the confirmation regarding the created resource is sent, by the first exchange network function or service 541, to the first specific network function or service 141 including the resource address where the resource can be reached, i.e. at endpoint Y of the first exchange network function or service 541. In an eighth processing step 808 according to Figure 8, the preparatory steps of the first to the seventh processing steps 801 to 807 are operatively used by means of a resource modification or a plurality of resource modification operations sent, by the first specific network function or service 141, to the first exchange network function or service 541, i.e. to endpoint Y, as indicated in the confirmation message in the sevenths processing step 807. In a ninth processing step 809 according to Figure 8, the resource modification or a plurality of resource modification operations is/are sent, by the first exchange network function or service 541, to the first further specific network function or service 241, i.e. to endpoint X.

Hence, a resource creation, initiated by the first specific network function or service 141, is indeed realized including a notification endpoint; however, due to the modification of messages and notifications in the network exchange function 500, especially regarding endpoints, the first specific network function or service 141 does not need to know the endpoint of the first further specific network function or service 241, as the network exchange function 500 replaced the returned resource address(es) so that they map to endpoints in the network exchange function 500 instead of to endpoints within the second mobile communication network 200.

While the mapping performed at the exchange network functions or services 540 can be static (e.g. the same input and output), the method also considers the dynamic generation of endpoint mappings. In Figure 9, a communication diagram representing dynamic generation of endpoint mappings is schematically shown: The network exchange function 500 comprises an endpoint management function (EMF) 560. The emulation management function 560 is tasked with the generation of a URI (uniform resource indicator) in the network exchange function 500 reachable for mobile communication networks (such as the first and second mobile communication network 100, 200) connected via the network exchange function 500 (e.g. for exposure in network function or service profiles, created resources or notification endpoints) based on any of the following:
-- FQDN(s) controlled by the network exchange function 500 (e.g. "ipx-service-ip-1.domain")
-- Network being accessed (e.g. "first mobile communication network 100")
-- network function or service type (e.g. "smf")
-- network function or service service name (e.g. "nsmf-pdusession")
-- network function or service instance identifier or network function or service service instance identifier (e.g. "123e4567-e89b-12d3-a456-426655440000")
-- Resource identifier (e.g. "pdu-session-07")
-- Subscription identifier (e.g. "subscription-1")

Several examples of generated URIs could be as follows:
-- All requests to the same network function or service type get redirected to the same IP address but with different URI suffixes depending on the respective mobile communication network: network exchange function 500 exposed session management function PDU session service URIs for the first mobile communication network 100: http://ipx-service-ip-1.domain/smf-pdusession/network-a
-- All requests to the same mobile communication network get redirected to the same IP address but with different URI suffixes depending on the network function or service type: network exchange function 500 exposed session management function PDU session service URIs: http://network-exchange-function-ip-1.domain/smf
-- Different similar combinations can then be used for generated resource's endpoints and notification endpoints.

The emulation management function 560 manages the setup and teardown of endpoint mappings at the network exchange function 500 (e.g. incoming requests towards http://network-exchange-function-ip-1.domain/smf should be forwarded towards http://smf-1.first-mobile-communication-network.domain).

According to the present invention, especially the following endpoint mapping creation triggers are considered:
-- Discovery request for a given resource received by the exchange network repository function 550 (e.g. endpoint mappings for the endpoints in the returned network function or service profiles can be generated)
-- network function or service profile received (e.g. endpoint mappings for the endpoints described in the network function or service profile can be then generated)
-- Resource created (e.g. a POST or PUT request creates a resource)
-- Notification endpoint signaled towards (e.g. when a subscription is created)

When an endpoint mapping creation trigger happens, the emulation management function 560 configures the relevant one of the exchange network functions or services 540 with endpoint mappings to enable the forwarding of messages via the network exchange function 500. This is exemplarily shown in Figure 9:

In a first processing step 901 according to Figure 9, the endpoint mapping creation trigger is initiated, which triggers, in a second processing step 902 according to figure 9 the creation of an endpoint mapping between an endpoint within the network exchange function 500 and a target endpoint. In a third processing step 903 according to Figure 9, the mapping between the endpoint within the network exchange function 500 and the target endpoint is configured for messages passing through exchange network functions or services 540 of the network exchange function 500 In a fourth processing step 904 according to Figure 9, the mapping between the endpoint within the network exchange function 500 and the target endpoint that will be exposed on the network function or service profiles returned by the exchange network repository function 550 of the network exchange function 500 is configured, hence resulting in a dynamic generation of endpoint mappings in the network exchange function 500.

Dynamic mappings can be released in the following situations:
-- For endpoints present in network function or service profiles: network function or service profiles contain an expiration time after which the returned result is not valid anymore. As such, an endpoint can be released when no network function or service has a valid network function or service profile result containing the given endpoint,
-- For notification endpoint subscriptions: when the subscription is deleted
-- For created resources: when the resource is deleted

Hence, according to the present invention, the network exchange function 500 is provided for 5G SBI communications placed between two or more mobile communication network 100, 200 with an exchange network repository function 550 that maps the endpoint addresses from registered network function or service in one network so that they point towards functional entities (exchange network functions or services 540) in the network exchange function 500 which act impersonating the actual network functions or services of the respective mobile communication networks. These exchange network functions or services 540 then forward incoming messages towards the counterpart network function or service of the respective mobile communication network so that from the perspective of each of the networks communicating through the network exchange function 500, the service of the network exchange function 500 is the other (or counterpart) network. Especially, the resource location endpoints in the ingress/egress requests passing through an exchange network function or service are replaced with endpoints within the network exchange function 500. These resource location endpoints may be SBI endpoints (e.g. an exposed API endpoint) or non-SBI endpoints (e.g. UPF N3 endpoints for user plane). The dynamic setup, by the endpoint management function 560, of the endpoints is triggered by:
-- a discovery request towards the network repository function of the network exchange function 500,
-- a network function or service profile received by the network repository function of the network exchange function 500, or
-- an observed resource created message or an observed notification endpoint within a message,
and the removal of a dynamically-created endpoint mapping is triggered:
-- for endpoints returned in network function or service profiles responses: no network function or service has a valid network function or service profile result containing the given endpoint,
-- for subscription endpoints: when the subscription is deleted or
-- for created resources: when the resource is deleted.
Especially according to the present invention, the authorization data is/are also replaced by the network repository function of the network exchange function 500.

## Claims

1. Method for an improved exchange and/or interworking functionality between a first mobile communication network (100) and a second mobile communication network (200), wherein the first mobile communication network (100) comprises a first network repository function (150) and a plurality of first network functions or services (140), and wherein the second mobile communication network (200) comprises a second network repository function (250) and a plurality of second network functions or services (240), wherein a network exchange function (500) provides an exchange and/or interworking functionality between the first and second mobile communication network (100, 200), wherein the network exchange function (500) comprises an exchange network repository function (550) and a plurality of exchange network functions or services (540), wherein by means of the first and second network repository function (150, 250) both the first and second plurality of network functions or services (140, 240) are able to discover interconnection endpoints by means of which communication with other network functions or services in this network or another network is able to be realized, wherein control plane messages or messages regarding procedures are exchanged, via the network exchange function (500), between the first and second mobile communication network (100, 200), such messages involving pieces of endpoint information referring to target interconnection endpoints within the first or second mobile communication network (100, 200), wherein the method comprises the following step:
the control plane messages or messages regarding procedures are modified with respect to their pieces of endpoint information such that instead of the pieces of endpoint information referring to target interconnection endpoints within the first or second mobile communication network (100, 200), the pieces of endpoint information refer to the network exchange function (500) or its exchange network functions or services (540).

2. Method according to claim 1, wherein the control plane messages or messages regarding procedures exchanged relate to the mapping or the transmission of network function or service profile information, wherein - during a network function or service profile information discovery phase initiated by one of the plurality of first network functions or services (140) where the initiating network function or service queries a network repository function about network functions or services to communicate with - one or more pieces of discovery request endpoint information, referring to a target interconnection endpoint or endpoints within the second mobile communication network (200) and returned by the network repository function are modified such that the discovery request endpoint information refers to a corresponding one of the plurality of exchange network functions or services (540), wherein especially the one or more pieces of network function or services profile information each comprise one or more pieces of discovery request endpoint information.

3. Method according to one of the preceding claims, wherein the control plane messages or messages regarding procedures exchanged realize a subscribe-notify communication pattern, wherein, during a subscription request phase initiated by one of the plurality of first network functions or services (140), a subscription request endpoint information, referring to a target interconnection endpoint within the first mobile communication network (100), is modified such that the subscription request endpoint information refers to a corresponding one of the plurality of exchange network functions or services (540).

4. Method according to one of the preceding claims, wherein the control plane messages or messages regarding procedures exchanged relate to a resource creation between network functions or services, wherein, during a resource creation request phase initiated by one of the plurality of first network functions or services (140), a resource creation request endpoint information, referring to a target interconnection endpoint within the second mobile communication network (200) referring to the created resource, is modified such that the resource creation request endpoint information refers to a corresponding one of the plurality of exchange network functions or services (540).

5. Method according to one of the preceding claims, wherein the modification of the endpoint information within the control plane messages or messages regarding procedures corresponds to modifying and/or replacing any required header such that the resulting modified control plane messages or messages regarding procedures are correctly seen by the receiving first or second or exchange network functions or services (140, 240, 540) as addressed to itself.

6. Method according to one of the preceding claims, wherein the network exchange function (500) comprises an endpoint management function (560), wherein the endpoint management function (560) generates URI information in the network exchange function (500)
-- in order to modify the control plane messages or messages regarding procedures and/or
-- in order to modify and/or replace any required header
based on one or a plurality of the following:
-- one or a plurality of fully qualified domain names controlled by the network exchange function (500),
-- the mobile communication network being accessed,
-- the type of the network function or service concerned,
-- the service name of the network function or service concerned,
-- the instance identifier or the service instance identifier of the network function or service concerned,
-- the resource identifier information of the network function or service concerned,
-- the subscription identifier information of the network function or service concerned.

7. Method according to one of the preceding claims, wherein, in addition to the first and second mobile communication network (100, 200) at least one further mobile communication network (330) is connected to or served by the network exchange function (500) such that control plane messages or messages regarding procedures are also exchanged via the network exchange function (500), and modified analogously, with respect an exchange between the first and the at least one further mobile communication network (100, 330) and/or between the second and the at least one further mobile communication network (200, 330).

8. System for an improved exchange and/or interworking functionality between a first mobile communication network (100) and a second mobile communication network (200), wherein the first mobile communication network (100) comprise a first network repository function (150) and a plurality of first network functions or services (140), and wherein the second mobile communication network (200) comprise a second network repository function (250) and a plurality of second network functions or services (240), wherein a network exchange function (500) provides an exchange and/or interworking functionality between the first and second mobile communication network (100, 200), wherein the network exchange function (500) comprises an exchange network repository function (550) and a plurality of exchange network functions or services (540), wherein control plane messages or messages regarding procedures are exchanged, via the network exchange function (500), between the first and second mobile communication network (100, 200), such messages involving pieces of endpoint information referring to target interconnection endpoints within the first or second mobile communication network (100, 200), wherein the system is configured such that: the control plane messages or messages regarding procedures are modified with respect to their pieces of endpoint information such that instead of the pieces of endpoint information referring to target interconnection endpoints within the first or second mobile communication network (100, 200), the pieces of endpoint information refer to the network exchange function (500) or its exchange network functions or services (540).

9. Network exchange function (500) for an improved exchange and/or interworking functionality between a first mobile communication network (100) and a second mobile communication network (200), wherein the first mobile communication network (100) comprise a first network repository function (150) and a plurality of first network functions or services (140), and wherein the second mobile communication network (200) comprise a second network repository function (250) and a plurality of second network functions or services (240), wherein a network exchange function (500) provides an exchange and/or interworking functionality between the first and second mobile communication network (100, 200), wherein the network exchange function (500) comprises an exchange network repository function (550) and a plurality of exchange network functions or services (540), wherein control plane messages or messages regarding procedures are exchanged, via the network exchange function (500), between the first and second mobile communication network (100, 200), such messages involving pieces of endpoint information referring to target interconnection endpoints within the first or second mobile communication network (100, 200), wherein the network exchange function (500) is configured such that:
the control plane messages or messages regarding procedures are modified with respect to their pieces of endpoint information such that instead of the pieces of endpoint information referring to target interconnection endpoints within the first or second mobile communication network (100, 200), the pieces of endpoint information refer to the network exchange function (500) or its exchange network functions or services (540).

10. Program comprising a computer readable program code, which, when executed on a computer and/or on a network node of a mobile communication network (100, 200) and/or on a network exchange function (500), or in part on a network node of a mobile communication network (100, 200) and in part on a network exchange function (500), causes the computer and/or the network node of the mobile communication network (100, 200) and/or the network exchange function (500) to perform a method according one of claims 1 to 7.

11. Computer program product for an improved emulation and/or interworking functionality between a first mobile communication network (100) and a second mobile communication network (200), the computer program product comprising a computer program stored on a storage medium, the computer program comprising program code which, when executed on a computer and/or on a network node of a mobile communication network (100, 200) and/or on a network exchange function (500), or in part on a network node of a mobile communication network (100, 200) and in part on a network exchange function (500), causes the computer and/or the network node of the mobile communication network (100, 200) and/or the network exchange function (500) to perform a method according one of claims 1 to 7.

## Amended claims

### Amended claims in accordance with Rule 137(2) EPC.

1. Method for an improved exchange and/or interworking functionality between a first mobile communication network (100) and a second mobile communication network (200), wherein the first mobile communication network (100) comprises a first network repository function (150) and a plurality of first network functions or services (140), and wherein the second mobile communication network (200) comprises a second network repository function (250) and a plurality of second network functions or services (240), wherein a network exchange function (500) provides an exchange and/or interworking functionality between the first and second mobile communication network (100, 200), wherein the network exchange function (500) comprises an exchange network repository function (550) and a plurality of exchange network functions or services (540), wherein by means of the first and second network repository function (150, 250) both the first and second plurality of network functions or services (140, 240) are able to discover interconnection endpoints by means of which communication with other network functions or services in this network or another network is able to be realized, wherein control plane messages or messages regarding procedures are exchanged, via the network exchange function (500), between the first and second mobile communication network (100, 200), such messages involving pieces of endpoint information referring to target interconnection endpoints within the first or second mobile communication network (100, 200), wherein the method comprises the following step:
the control plane messages or messages regarding procedures are modified with respect to their pieces of endpoint information such that instead of the pieces of endpoint information referring to target interconnection endpoints within the first or second mobile communication network (100, 200), the pieces of endpoint information refer to the network exchange function (500) or its exchange network functions or services (540).

2. Method according to claim 1, wherein the control plane messages or messages regarding procedures exchanged relate to the mapping or the transmission of network function or service profile information, wherein - during a network function or service profile information discovery phase initiated by one of the plurality of first network functions or services (140) where the initiating network function or service queries a network repository function about network functions or services to communicate with - one or more pieces of discovery request endpoint information, referring to a target interconnection endpoint or endpoints within the second mobile communication network (200) and returned by the network repository function are modified such that the discovery request endpoint information refers to a corresponding one of the plurality of exchange network functions or services (540), wherein especially the one or more pieces of network function or services profile information each comprise one or more pieces of discovery request endpoint information.

3. Method according to one of the preceding claims, wherein the control plane messages or messages regarding procedures exchanged realize a subscribe-notify communication pattern, wherein, during a subscription request phase initiated by one of the plurality of first network functions or services (140), a subscription request endpoint information, referring to a target interconnection endpoint within the first mobile communication network (100), is modified such that the subscription request endpoint information refers to a corresponding one of the plurality of exchange network functions or services (540).

4. Method according to one of the preceding claims, wherein the control plane messages or messages regarding procedures exchanged relate to a resource creation between network functions or services, wherein, during a resource creation request phase initiated by one of the plurality of first network functions or services (140), a resource creation request endpoint information, referring to a target interconnection endpoint within the second mobile communication network (200) referring to the created resource, is modified such that the resource creation request endpoint information refers to a corresponding one of the plurality of exchange network functions or services (540).

5. Method according to one of the preceding claims, wherein the modification of the endpoint information within the control plane messages or messages regarding procedures corresponds to modifying and/or replacing any required header such that the resulting modified control plane messages or messages regarding procedures are correctly seen by the receiving first or second or exchange network functions or services (140, 240, 540) as addressed to itself.

6. Method according to one of the preceding claims, wherein the network exchange function (500) comprises an endpoint management function (560), wherein the endpoint management function (560) generates URI information in the network exchange function (500)
- - in order to modify the control plane messages or messages regarding procedures
and/or
- - in order to modify and/or replace any required header
based on one or a plurality of the following:
- - one or a plurality of fully qualified domain names controlled by the network exchange function (500),
- - the mobile communication network being accessed,
- - the type of the network function or service concerned,
- - the service name of the network function or service concerned,
- - the instance identifier or the service instance identifier of the network function or service concerned,
- - the resource identifier information of the network function or service concerned,
- - the subscription identifier information of the network function or service concerned.

7. Method according to one of the preceding claims, wherein, in addition to the first and second mobile communication network (100, 200) at least one further mobile communication network (330) is connected to or served by the network exchange function (500) such that control plane messages or messages regarding procedures are also exchanged via the network exchange function (500), and modified analogously, with respect an exchange between the first and the at least one further mobile communication network (100, 330) and/or between the second and the at least one further mobile communication network (200, 330).

8. System for an improved exchange and/or interworking functionality between a first mobile communication network (100) and a second mobile communication network (200), wherein the first mobile communication network (100) comprise a first network repository function (150) and a plurality of first network functions or services (140), and wherein the second mobile communication network (200) comprise a second network repository function (250) and a plurality of second network functions or services (240), wherein a network exchange function (500) is configured to provide an exchange and/or interworking functionality between the first and second mobile communication network (100, 200), wherein the network exchange function (500) comprises an exchange network repository function (550) and a plurality of exchange network functions or services (540), wherein control plane messages or messages regarding procedures are configured to be exchanged, via the network exchange function (500), between the first and second mobile communication network (100, 200), such messages involving pieces of endpoint information referring to target interconnection endpoints within the first or second mobile communication network (100, 200), wherein the system is configured such that:
the control plane messages or messages regarding procedures are modified with respect to their pieces of endpoint information such that instead of the pieces of endpoint information referring to target interconnection endpoints within the first or second mobile communication network (100, 200), the pieces of endpoint information refer to the network exchange function (500) or its exchange network functions or services (540).

9. Network exchange function (500) for an improved exchange and/or interworking functionality between a first mobile communication network (100) and a second mobile communication network (200), wherein the first mobile communication network (100) comprise a first network repository function (150) and a plurality of first network functions or services (140), and wherein the second mobile communication network (200) comprise a second network repository function (250) and a plurality of second network functions or services (240), wherein a network exchange function (500) is configured to provide an exchange and/or interworking functionality between the first and second mobile communication network (100, 200), wherein the network exchange function (500) comprises an exchange network repository function (550) and a plurality of exchange network functions or services (540), wherein control plane messages or messages regarding procedures are configured to be exchanged, via the network exchange function (500), between the first and second mobile communication network (100, 200), such messages involving pieces of endpoint information referring to target interconnection endpoints within the first or second mobile communication network (100, 200), wherein the network exchange function (500) is configured such that:
the control plane messages or messages regarding procedures are modified with respect to their pieces of endpoint information such that instead of the pieces of endpoint information referring to target interconnection endpoints within the first or second mobile communication network (100, 200), the pieces of endpoint information refer to the network exchange function (500) or its exchange network functions or services (540).

10. Program comprising a computer readable program code, which, when executed on a computer and/or on a network node of a mobile communication network (100, 200) and/or on a network exchange function (500), or in part on a network node of a mobile communication network (100, 200) and in part on a network exchange function (500), causes the computer and/or the network node of the mobile communication network (100, 200) and/or the network exchange function (500) to perform a method according one of claims 1 to 7.

11. Computer program product for an improved emulation and/or interworking functionality between a first mobile communication network (100) and a second mobile communication network (200), the computer program product comprising a computer program stored on a storage medium, the computer program comprising program code which, when executed on a computer and/or on a network node of a mobile communication network (100, 200) and/or on a network exchange function (500), or in part on a network node of a mobile communication network (100, 200) and in part on a network exchange function (500), causes the computer and/or the network node of the mobile communication network (100, 200) and/or the network exchange function (500) to perform a method according one of claims 1 to 7.
